## Europäisches Patentamt

## European Patent Office

## Office européen des brevets

(19)

(11) Veröffentlichungsnummer : **0 356 732 B1**

# (12) EUROPÄISCHE PATENTSCHRIFT

(45) Veröffentlichungstag der Patentschrift :
**13.05.92 Patentblatt 92/20**

(51) Int. Cl.⁵ : **F16L 58/04, C23C 8/12**

(21) Anmeldenummer : **89114082.4**

(22) Anmeldetag : **31.07.89**

(54) **Innenoxidierte Rohre.**

(30) Priorität : **12.08.88 DE 3827353**

(43) Veröffentlichungstag der Anmeldung :
**07.03.90 Patentblatt 90/10**

(45) Bekanntmachung des Hinweises auf die
Patenterteilung :
**13.05.92 Patentblatt 92/20**

(84) Benannte Vertragsstaaten :
**AT BE CH DE ES FR GB GR IT LI LU NL SE**

(56) Entgegenhaltungen :
**EP-A- 0 281 641
DE-A- 3 004 455
DE-B- 3 003 228
FR-A- 2 500 613**

(73) Patentinhaber : **KM-kabelmetal
Aktiengesellschaft
Klosterstr. 29
W-4500 Osnabrück (DE)**

(72) Erfinder : **Triquet, Christian, Dipl.-Ing.
Rothertstrasse 36
W-4500 Osnabrück (DE)**
Erfinder : **Baukloh, Achim, Dr.-Ing.
Am Kurgarten 12
W-4505 Bad Iburg (DE)**
Erfinder : **Reiter, Ulrich, Dr.-Ing.
Rehmstrasse 55
W-4500 Osnabruck (DE)**

EP 0 356 732 B1

## Beschreibung

Die Erfindung betrifft ein gegen Lochkorrosion beständiges Rohr aus Kupfer oder einer Kupferlegierung mit einer Oxidschicht an der inneren Rohroberfläche, insbesondere zur Verwendung im sanitären Bereich. Die Erfindung ist ferner auf ein Verfahren zur Herstellung eines derartigen Rohrs gerichtet.

Rohre aus Kupfer oder Kupferlegierungen werden als Rohrleitungen im sanitären Bereich, beispielsweise für Kalt- und Warmwasser, aber auch in Kondensatoren und Wärmetauschern verwendet. Zur Vermeidung von Korrosionsschäden, insbesondere durch das Auftreten lokaler Lochfraßstellen, ist schon vorgeschlagen worden, die zu Kohlenstoffablagerungen neigenden auf der Rohrinnenfläche befindlichen Ziehölreste vor dem Glühen weitestgehend durch entfettende Mittel, beispielsweise durch organische Lösungsmittel, wie Tri- oder Perchlorethylen, zu entfernen.

Weitere Verfahren sehen vor, die Glühung in einer reduzierenden Atmosphäre durchzuführen und die Innenoberfläche der Rohre dann von dem entstandenen Kohlenstofffilm durch ein Strahlmittel zu befreien. Hierbei wird in das Rohr das Strahlmittel entweder mittels Druckluft oder Druckwasser eingeführt.

Schließlich beschreiben die DE-A-30 04 455 und FR-A-2 500 613 innenoxidierte Rohre aus Kupfer oder Kupferlegierungen, deren am Grundmetall haftende Oxidschicht im Dickenbereich von 0,1 bis 3 $\mu$m liegt und die gleichzeitig einen niedrigen Restkohlenstoffgehalt von kleiner oder gleich 0,05 mg/dm² aufweisen. Diese Eigenschaftswerte werden dadurch eingestellt, daß die Wärmebehandlung nach dem Entfetten der Rohre in einer sauerstoffhaltigen Atmosphäre, wie zum Beispiel einem bestimmten Gasgemisch aus Sauerstoff, Helium und Argon durchgeführt wird. Bei einer Wärmebehandlung unter oxidierenden Bedingungen, insbesondere wenn diese stationär durchgeführt wird, besteht jedoch die Gefahr, daß die sich ausbildenden Oxidschichten schlecht haften, eine größere Dicke aufweisen und gegebenenfalls porös sind, wodurch sich negative Auswirkungen unter anderem auch auf das Korrosionsverhalten nicht vermeiden lassen. Darüber hinaus können die in den Ausführungsbeispielen der DE-A-30 04 455 genannten Oxidschichten mit einer mittleren Dicke von 1 $\mu$m bei einer nachfolgenden Bearbeitung der Rohre, beispielsweise beim Biegen, leicht rissig werden oder abplatzen.

Ähnliche Probleme liegen vor, wenn Rohre nach einer Wärmebehandlung unter oxidierenden Bedingungen für die Herstellung des halbharten Zustands noch einer querschnittsvermindernden Bearbeitung unterzogen werden müssen. Die Verformungskräfte führen dann ebenfalls zu Rissen und Abplatzungen der auf der Innenoberfläche ausgebildeten Oxidschicht. Die abgelösten Oxide können dann innerhalb einzelner Aggregate einer Installation zu Störungen führen.

Der Erfindung liegt die Aufgabe zugrunde, ein innenoxidiertes Rohr aus Kupfer oder einer Kupferlegierung mit insbesondere hoher Beständigkeit gegen Lochfraßkorrosion zur Verfügung zu stellen, deren auf der Innenoberfläche vorhandenen Oxide nicht durch ungünstige Ausbildung oder durch Ablösen zu negativen Auswirkungen auf die Korrosionsbeständigkeit der Rohre oder auf die Funktionssicherheit der Installation führen.

Die Aufgabe wird erfindungsgemäß dadurch gelöst, daß die Dicke der am Grundmetall haftenden im wesentlichen aus Kupferoxidkristallen bestehenden Oxidschicht im Bereich von 0,01 bis 0,09 liegt und die mit einer vorzugsweisen (1,1,1)-Struktur orientierten Kupferoxidkristalle eine maximale Korngröße von 0,05 $\mu$m aufweisen. Vorteilhafte Weiterbildungen der Erfindung ergeben sich aus den Unteransprüchen.

Ein bevorzugtes Verfahren zur Herstellung eines innenoxidierten Rohrs ist durch das Kennzeichen des Anspruchs 5 erfaßt. Die nach diesem Verfahren hergestellten innenoxidierten Rohre weisen dabei eine Dicke der Kupferoxidschicht auf, die vorzugsweise im Bereich von 0,03 bis 0,09 $\mu$m liegt. Mit dem Verfahren ist es sehr genau möglich, nahezu jeden Wert innerhalb des angegebenen Bereichs durch Variation der Verfahrensparameter einzustellen. Der Fachmann in der Produktion wird dabei in die Lage versetzt, die jeweiligen Betriebsbedingungen für die Glühbehandlung festzulegen, insbesondere die Dauer der Glühbehandlung unter oxidierenden Bedingungen als auch die Zusammensetzung und den Druck des hierzu notwendigen Gasgemisches. Zur wirtschaftlichen Fertigung der Rohre sowie für eine gleichmäßige Ausbildung des Oxidbelags an der Innenoberfläche der Rohre, ist es ein notwendiges Verfahrensmerkmal, die Glühbehandlung im Durchlauf, das heißt, mit einem kontinuierlichen Verfahren durchzuführen.

Überraschend wurde bei Untersuchungen gefunden, daß im Gegensatz zu der bisherigen Auffassung der Fachwelt schon sehr geringe Oxidschichtdicken auf der Innenoberfläche der Rohre auch in aggressiven Wässern einen ausreichenden Schutz gegen Lochfraßkorrosion gewährleisten. Auch nach einer Querschnittsverformung um bis zu 20 % oder nach extremen Biegungen um bis zu 180 °C tritt keine Verschlechterung des Korrosionsverhaltens ein.

Ob die Oxidschicht auf der Innenoberfläche der Rohre durch Risse oder Abplatzungen Verletzungen aufweist, kann leicht mit bloßem Auge festgestellt werden. Für diese Untersuchungen wurden Rohre in Längsrichtung durchtrennt, nachdem sie vorher verformt, beispielsweise um bis zu 180 °C gebogen worden waren. Die Oxidschicht wird dann als am Grundmetall haftend bezeichnet, wenn die Innenoberfläche der Rohre nach der Verformung keine Anzeichen einer Verletzung durch Risse oder Abplatzungen aufweist.

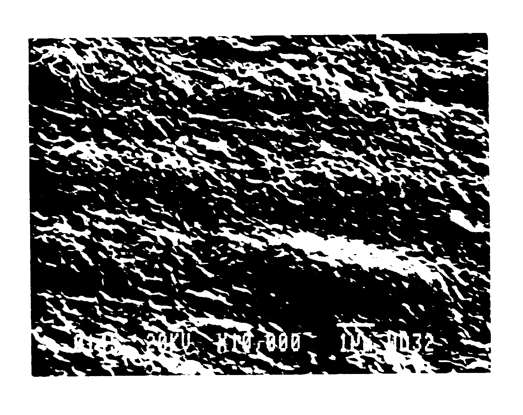

Beobachtungen der auf dem Grundmetall befindlichen Oxidschicht mit Hilfe eines Rasterelektronenmikroskops haben ergeben, daß die Korngröße der Kupferoxidkristalle einen Wert von 0,05 $\mu$m nicht überschreitet. Das visuelle Erscheinungsbild der Oxidschicht zeichnet sich im Gegensatz zu den bisher untersuchten Rohrrinnenflächen durch eine sehr einheitliche Oberfläche aus. Die Oxidschicht hat eine hellrote Farbe und weist ein hohes Reflexionsvermögen bei Lichteinfall auf. Es konnte ferner festgestellt werden, daß die Kristalle der Oxidschicht aus $Cu_2O$ (Cuprit) bestehen und vorzugsweise eine orientierte (1,1,1)-Struktur besitzen. Die Figur zeigt in 10 000-facher Vergrößerung die an der Rohrinnenfläche haftende $Cu_2O$-Schicht, wobei insbesondere die äußerst gleichmäßige Oberfläche der Schicht, beziehungsweise die geringe Rauhigkeit der Oberfläche zu erkennen ist.

Bisher ist man davon ausgegangen, daß zwischen der Dicke der Oxidschicht und dem Restkohlenstoffgehalt auf der Innenoberfläche der Rohre eine einfache Beziehung besteht:

Je dünner die Oxidschicht ausgebildet ist, desto geringer ist auch der Restkohlenstoffgehalt. Eine Verminderung des Restkohlenstoffgehalts auf einen Wert unterhalb 0,03 mg/dm$^2$ war bisher allerdings nur durch eine extrem aufwendige Entfettung der Rohrinnenfläche vor einer Glühung unter oxidierenden Bedingungen zu erreichen. Die oxidierende Glühung selbst mußte dabei in einer Atmosphäre durchgeführt werden, die etwa 85 % eines Edelgasgemisches aus Helium und Argon aufweist.

Die erfindungsgemäßen innenoxidierten Rohre zeigen nunmehr, daß ein Restkohlenstoffgehalt von kleiner oder gleich 0,05 mg/dm$^2$ nicht notwendigerweise erforderlich ist, um Korrosionsschäden zu vermeiden. Wesentlich ist vielmehr die Gleichmäßigkeit und die geringe Dicke der Oxidation, wobei die Schichtdicke im Bereich von 0,01 bis 0,09 $\mu$m liegt, und die Kupferoxidkristalle vorzugsweise eine orientierte (1,1,1)-Struktur und eine maximale Korngröße von 0,05 $\mu$m besitzen.

Um ein innenoxidiertes Rohr gemäß der Erfindung herzustellen, wurde zunächst die Innenoberfläche eines in Ringform vorliegenden Kupferrohrs, beispielsweise aus phosphordesoxidiertem Kupfer, mit einem Verfahren entfettet, wie es in der DE-A-32 07 135 beschrieben ist. Der Restfettgehalt auf der Rohrinnenoberfläche lag vor der oxidierenden Glühbehandlung unterhalb des Werts 0,4 mg/dm$^2$. Jeweils einzelne Rohrlängen der endseitig untereinander mit gasdurchlässigen Verbindungsstücken verbundenen Kupferrohre wurden im kontinuierlichen Durchlauf mittels Widerstands- oder Induktiverwärmung bei einer im Bereich von 600 bis 730 °C liegenden Temperatur geglüht, wobei in das Innere der Rohre ein kontrolliertes Gasgemisch eingeleitet wurde. Abhängig von der zwischen 50 und 220 m/min festlegbaren Durchlaufgeschwindigkeit sowie vom Querschnitt der zu glühenden Rohre wurde jeweils die Atmosphäre innerhalb der Rohrlänge eingestellt. Vorzugsweise besteht das zu verwendende Gasgemisch aus 5 bis etwa 15 Vol.% Sauerstoff und 85 bis 95 Vol.% Stickstoffgas. Durch ständige Kontrolle der Parameter Temperatur und Geschwindigkeit der Durchlaufglühung sowie des Sauerstoffgehalts der Gasatmosphäre konnte eine sehr gleichmäßige Kupferoxidschicht eingestellt werden, deren Dicke einen Wert innerhalb des angestrebten Bereichs von 0,01 bis 0,09 $\mu$m aufweist.

Als Ergebnis einer Reihe von durchgeführten Versuchen ist festgestellt worden, daß die bevorzugte Schichtdicke des am Grundmetall haftenden Kupferoxids im wesentlichen innerhalb des Bereichs zwischen 0,03 und 0,09 $\mu$m liegt. Die vollständige Haftung dieser dünnen Kupferoxidbelegung bleibt auch dann erhalten, wenn das Kupferrohr um bis zu 20 % querschnittsverringernd verformt oder um bis zu 180 °C gebogen wurde. Abplatzungen oder Risse in der Oxidschicht waren nach der Vorformung weder mit bloßem Auge noch unter einem Mikroskop bei 40-facher Vergrößerung zu erkennen.

Die gute Haftung der Kupferoxide ist auch für den Fall von besonderer Bedeutung, daß halbharte Kupferrohre hergestellt werden sollen. Zur Einstellung des Zustands "halbhart" müssen weichgeglühte Kupferrohre nämlich querschnittsverringernd verformt werden, wobei sie beispielsweise von der Abmessung 18 mm auf einen Durchmesser von 15 mm gezogen werden. Hartgezogene Kupferrohre werden üblicherweise auf die gewünschte Endabmessung verformt, ohne daß zwischen den Ziehschritten Rekristallisationsglühungen eingeschoben werden. Zur Ausbildung einer dünnen Kupferoxidaddition auf der Innenoberfläche der Rohre werden diese dann so kurzzeitig bei Temperaturen von etwa 250 °C wärmebehandelt, daß sich die mechanischen Eigenschaften nicht nachteilig verändern können.

## Patentansprüche

1. Gegen Lochkorrosion beständiges Rohr aus Kupfer oder einer Kupferlegierung mit einer Oxidschicht an der inneren Rohroberfläche, insbesondere zur Verwendung im sanitären Bereich, **dadurch gekennzeichnet**, daß die Dicke der am Grundmetall haftenden im wesentlichen aus Kupferoxidkristallen bestehenden Oxidschicht im Bereich von 0,01 bis 0,09 $\mu$m liegt und die mit einer vorzugsweisen (1,1,1)-Struktur orientierten Kupferoxidkristalle eine maximale Korngröße von 0,05 $\mu$m aufweisen.

2. Gegen Lochkorrosion beständiges Rohr nach Anspruch 1, **dadurch gekennzeichnet**, daß es in einem nach dem letzten Verformungsschritt weichgeglühten Zustand vorliegt.

3. Gegen Lochkorrosion beständiges Rohr nach Anspruch 1, **dadurch gekennzeichnet**, daß es im halbharten Zustand vorliegt.

4. Gegen Lochkorrosion beständiges Rohr nach Anspruch 1, **dadurch gekennzeichnet**, daß es im hartgezogenen Zustand vorliegt.

5. Verfahren zur Herstellung eines innenoxidierten Rohrs nach einem der Ansprüche 1 bis 4, **gekennzeichnet durch** folgende Verfahrensschritte:
- Entfetten mit einem Lösungsmittel
- kontinuierliche Glühbehandlung im Temperaturbereich von etwa 600 bis 730 °C und einer Durchlaufgeschwindigkeit von 50 bis 220 m/min, wobei
- abhängig von dem Rohrdurchmesser und der Geschwindigkeit der Durchlaufglühbehandlung
- im Inneren des Rohrs eine Glühatmosphäre eingestellt wird, die aus 1 bis 25 Vol.%, vorzugsweise 5 bis unterhalb 15 Vol.% Sauerstoff und 75 bis 99 Vol.%, vorzugsweise etwa 85 bis 95 Vol.% Stickstoff besteht.

6. Verwendung eines innenoxidierten Rohrs nach einem der Ansprüche 1 bis 4 als lochfraßbeständiges Installationsrohr mit einem Restkohlenstoffgehalt von 0,05 bis 0,15 mg/dm$^2$ und einer Oxidschichtdicke von 0,03 bis 0,09 μm.

## Claims

1. A pipe which is resistant to pitting corrosion and is made of copper or a copper alloy with an oxide layer on the inner surface of the pipe, in particular for use in the plumbing sector, characterised in that the thickness of the oxide layer which adheres to the base metal and substantially consists of copper oxide crystals is in the range of 0.01 to 0.9 μm, and the copper oxide crystals, which are orientated preferably with a (1,1,1) structure, have a maximum grain size of 0.05 μm.

2. A pipe which is resistant to pitting corrosion as claimed in Claim 1, characterised in that it exhibits a soft-annealed state following the last deformation step.

3. A pipe which is resistant to pitting corrosion as claimed in Claim 1, characterised in that it exhibits a semi-hard state.

4. A pipe which is resistant to pitting corrosion as claimed in Claim 1, characterised in that it exhibits a hard-drawn state.

5. A process for the production of an internally oxidized pipe as claimed in one of Claims 1 to 4, characterised by the following process steps:
- degreasing with a solvent
- continuous annealing treatment in the temperature range from approximately 600 to 730xC and a flow speed of 50 to 220 m/min, where
- in dependence upon the pipe diameter and the speed of the continuous annealing treatment
- inside the pipe an annealing atmosphere is set which comprises 1 to 25 vol. %, preferably 5 to less than 15 vol. % oxygen and 75 to 99 vol. %, preferably approximately 85 to 95 vol. % nitrogen.

6. The use of an internally oxidized pipe as claimed in one of Claims 1 to 4 as pitting-resistant plumbing pipe having a residual carbon content of 0.05 to 0.15 mg/dm$^2$ and an oxide layer thickness of 0.03 to 0.09 μm.

## Revendications

1. Tuyau en cuivre ou en un alliage de cuivre stabilisé contre la corrosion pénétrante par une couche d'oxyde sur sa surface intérieure, en particulier pour être utilisé dans le domaine sanitaire, caractérisé en ce que l'épaisseur de la couche d'oxyde adhérant au métal de base et composée essentiellement de cristaux d'oxyde de cuivre se situe dans la plage de 0,01 à 0,09 x 10$^{-6}$m et en ce que les cristaux d'oxyde de cuivre orientés avec une structure -(1,1,1) préférentielle ont une dimension maximale des grains de 0,05 x 10$^{-6}$m.

2. Tuyau stabilisé contre la corrosion pénétrante, selon la revendication 1, caractérisé en ce qu'il se présente dans un état de recuit doux après la dernière phase de déformation.

3. Tuyau stabilisé contre la corrosion pénétrante selon la revendication 1, caractérisé en ce qu'il se présente à l'état mi-dur.

4. Tuyau stabilisé contre la corrosion pénétrante selon la revendication 1, caractérisé en ce qu'il se présente à l'état étiré dur.

5. Procédé pour fabriquer un tuyau oxydé intérieurement selon une des revendications 1 à 4, caractérisé par les étapes de procédé suivantes :
- dégraissage avec un solvant
- traitement de recuit continu dans la zone de températures d'environ 600 à 730°C et à une vitesse de passage de 50 à 220 m/min, dans lequel
- une atmosphère de recuit à l'intérieur du tuyau est réglée en fonction du diamètre du tuyau et de la vitesse du recuit continu
- l'atmosphère de recuit est constituée de 1 à 25 % en volume, de préférence de 5 à moins de 15 % en volume d'oxygène et de 75 à 99 % en volume, de préférence environ 85 à 95 % en volume d'azote

6. Utilisation d'un tuyau oxydé intérieurement selon une des revendications 1 à 4 comme tuyau pour installation pour installation, stabilisé contre la corrosion perforante et ayant une teneur résiduaire en carbone de 0,05 à 0,15 mg/dm$^2$ et une épaisseur de couche d'oxyde de 0,03 à 0,09 x 10$^{-6}$m.